# EUROPÄISCHE PATENTANMELDUNG

(11) **EP 0 999 372 A1**
(43) Veröffentlichungstag der Anmeldung: **10.05.2000**
(21) Anmeldenummer: 99121645.8
(22) Anmeldetag: 30.10.1999
(51) Int. Cl.: F16C 11/06

(54) **Kugelgelenk**

(30) Priorität: 02.11.1998 DE 19850423
(71) Anmelder: Sachsenring Entwicklungsgesellschaft mbH, 08058 Zwickau (DE)
(72) Erfinder: Strauch, Jürgen, Dipl.-Ing., 08115 Lichtentanne (DE); Trepte, Jens, Dr.-Ing., 09129 Chemnitz (DE); Wackes, Ullrich, Ing., 08115 Lichtentanne (DE); Richter, Jürgen, Ing., 08435 Gospersgrun (DE)
(74) Vertreter: Rumrich, Gabriele

(57) **Zusammenfassung**

Die Erfindung betrifft ein Kugelgelenk mit einer in einer Gleitschale (2) aufgenommenen Kugel (3.1) eines Kugelzapfens (3), wobei die Gleitschale (2) mit der darin befindlichen Kugel (3.1) des Kugelzapfens (3) in eine Öffnung eines Gehäuses (1) einknüpfbar und nach der Montage über an zwei sich axial gegenüberliegenden Anlageelementen (2.1,2.2) ausgebildeten Anlageflächen (A1,A2), die an beiden Stirnflächen des Gehäuses (1) anliegen, axial lagefixiert ist und im Bereich des in Montagerichtung vorn liegenden Anlageelementes der Gleitschale (2) eine in Richtung zur Kugel (3.1) des Kugelzapfens (3) weisende Ausnehmung (2.3) aufweist, die beim Einknüpfen ein radiales elastisches Zusammenfedern des Anlageelementes (2.1) auf den Innendurchmesser des Gehäuses (1) gewährleistet. Aufgabengemäß weist die Gleitschale (2) in Montagerichtung mindestens zwei voneinander beabstandete Anlageelemente (2.1,2.2) auf. In die im Bereich der Anlageelemente (2.1,2.2) radial angeordneten Ausnehmungen (2.3) ist nach der Montage mindestens ein Fixierungselement (4) einbringbar, welches bei axialer Belastung das Zusammenfedern der Anlageelemente (2.1,2.2) verhindert.

## Beschreibung

Die Erfindung betrifft ein Kugelgelenk nach dem Oberbegriff des ersten Patentanspruchs.

Nach DE 38 43 331 C1 und DE 44 33 762 C2 sind Kugelgelenke bekannt, die aus einem Gehäuse bestehen, in welchem eine Gleitschale sitzt, in der die Kugel eines Kugelzapfens schwenkbar gelagert ist. Die Gleitschale liegt dabei mit an zwei Ringschultern ausgebildeten ringförmigen Anlageflächen an beiden Stirnflächen des Gehäuses an, wodurch die Gleitschale axial im Gehäuse lagefixiert wird. Um das Einknüpfen der Gleitschale in das Gehäuse zu gewährleisten, weist diese im Bereich der in Montagerichtung vorn liegenden Ringschulter eine in Richtung zur Kugel des Kugelzapfens weisende tiefe ringförmige Ausnehmung auf, die beim Einknüpfen eine Durchmesserreduzierung der Ringschulter auf den Innendurchmesser des Gehäuses gewährleistet. Die Größe der Durchmesserreduzierung ist dabei durch die Wahl eines harten Kunststoffes für die Gleitschale begrenzt, wodurch wiederum nur eine geringe Überlappung zwischen der in Montagerichtung liegenden Ringschulter und dem Gehäuse möglich ist. Nachteilig ist, daß damit bei hohen axialen Belastungen, die entgegen der Einknüpfrichtung wirken, die in Montagerichtung angeordnete Ringschulter bereits bei einem geringem Ausweichen in Richtung zur ringförmigen Ausnehmung die daran ausgebildete Anlagefläche radial bis auf den Innendurchmesser des Gehäuses zurückfedert und der Kugelzapfen mit Gleitschale aus dem Gehäuse gerissen wird.

Aufgabe der Erfindung ist es, ein Kugelgelenk zu entwickeln, welches auch bei hohen axialen Belastungen ein Ausreißen der Lagerschale zuverlässig verhindert.

Diese Aufgabe wird erfindungsgemäß mit den Merkmalen des ersten Patentanspruches gelöst.

Das Kugelgelenk weist dabei bekannter Weise ein Gehäuse auf, in welches eine Gleitschale mit einer darin aufgenommenen Kugel eines Kugelzapfens eingeknüpft wird. Die Gleitschale verfügt über zwei sich axial gegenüberliegende Anlageelemente, an welchen Anlageflächen ausgebildet sind, die nach der Montage an beiden Stirnflächen des Gehäuses anliegen und die axiale Lagefixierung der Gleitschale gewährleisten. Die radiale Lagefixierung ist dadurch gegeben, daß der Außendurchmesser der Gleitschale mit dem Innendurchmesser des Gehäuses korrespondiert. In dem Bereich des in Montagerichtung vorn liegenden Anlageelementes ist eine in Richtung zur Kugel des Kugelzapfens weisende Ausnehmung eingebracht, die beim Einknüpfen ein radiales elastisches Zusammenfedern des Anlageelementes bis auf den Innendurchmesser des Gehäuses gewährleistet. Nach dem Durchschieben durch das Gehäuse federn die Anlageelemente nach außen und rasten hinter der Stirnfläche des Gehäuses ein. In die im Bereich der Anlageelemente radial angeordneten Ausnehmungen wird nun mindestens ein Fixierungselement eingebracht, welches bei axialer Belastung das Zusammenfedern der Anlageelemente verhindert. Das Fixierungselement kann dabei ringförmig oder ringsegmentförmig ausgebildet sein. Es ist auch möglich, das Fixierungselement an einem Deckel anzuformen, der eine ggf. in Montagerichtung offene Gleitschale verschließt.

Gemäß einer weiteren Ausführungsform ist es auch möglich, die Anlageelemente so zu dimensionieren, daß sie in Ausgangslage mit ihrem Außenmaß dem Innenmaß des Gehäuses entsprechen und bei der Montage nicht zusammengedrückt werden. In diesem Fall werden die Anlegeelemente durch Eindrücken des Fixierelementes in die Ausnehmung radial nach außen gespreizt, so daß sie hinter die Stirnfläche gelangen. In diesem Fall ist die Aussparung in ihrer Breite um den Betrag, um welchen die Anlageelemente auseinandergedrückt werden sollen, kleiner zu wählen als die Breite des Fixierelementes. Bei dieser Variante kann das Anlageelement eine Auflaufschräge aufweisen, durch die zusätzlich eine axiale Vorspannung gegen das Gehäuse erzielt wird. Die Auflaufschräge weist von der Außenkante des Anlageelementes in Richtung zur Kugel des Kugelzapfens. Erfindungsgemäß weist die Gleitschale in Montagerichtung mindestens zwei voneinander beabstandete Anlageelemente auf.

Vorteilhafter Weise ist in den Ausnehmungen mindestens ein Rastelement angeordnet, durch welches das Fixierungselement lagebestimmt wird.

Die Gleitschale kann beispielsweise zwei, drei, vier oder noch mehr voneinander beabstandete Anlageelemente gleicher oder unterschiedlicher Dimensionierung aufweisen. Je mehr Anlageelemente vorgesehen sind, um so günstiger ist deren Federwirkung. Dabei muß zwischen den Anlageelementen ebenfalls ein genügender Abstand vorhanden sein, um deren ungehindertes radiales Zusammendrücken während der Montage zu gewährleisten.

Durch die erfindungsgemäße Lösung wird eine gute Federwirkung der Anlageelemente gewährleistet, wodurch die beim Einknüpfen zu überwindende Differenz zwischen Außenmaß der Anlageelemente und Innenmaß des Gehäuses vergrößert werden kann. Damit wird es wiederum möglich, die Anlagefläche zwischen Gehäuse und Anlageelementen zu erhöhen. Dies, in Verbindung mit der neuartigen Fixierung der Anlageelemente über das bzw. die Fixierungselemente, ermöglicht es, daß wesentlich größere axiale Kräfte als bei bekannten gattungsgemäßen Lösungen aufgenommen werden können.

Durch eine radiale Teilung der Gleitschale ist es vorteilhafter Weise erstmalig möglich, den unterschiedlichen Anforderungen der Gleitschalenbereiche gerecht zu werden. Der in Montagerichtung weisende untere Bereich besteht dabei aus weichem Kunststoff, welcher das elastische Zusammenfedern der Anlageelemente begünstigt und der in Richtung zum Kugelzapfen weisende obere Bereich aus hartem Kunststoff, der den Verschleißbedingungen in diesem Bereich gerecht wird und die axialen Auszugkräfte aufnimmt. Beide Gleitschalenbereiche werden vorteilhafter Weise vor der Montage miteinander durch eine stoffschlüssige Verbindung z.B. durch Ultraschallschweißen verbunden. Die Erfindung wird nachfolgend anhand von Ausführungsbeispielen und zugehörigen Zeichnungen näher erläutert. Es zeigen:
- Fig. 1:: Schnitt A-A eines Kugelgelenks gem. Fig. 2
- Fig. 2:: Ansicht des Kugelgelenks aus Richtung des Fixierelementes
- Fig. 3:: Einzelheit A gem. Fig. 1
- Fig. 4:: Schnitt eines Kugelgelenks mit geteilter Gleitschale
- Fig. 5a:: Schnitt durch ein Kugelgelenk mit auseinanderspreizbaren Anlageelementen vor Einpressen des Ringes in die Aussparungen
- Fig. 5b:: Schnitt durch ein Kugelgelenk, wobei die Anlageelemente durch den in die Aussparungen eingepreßten Ring auseinandergespreizt werden.

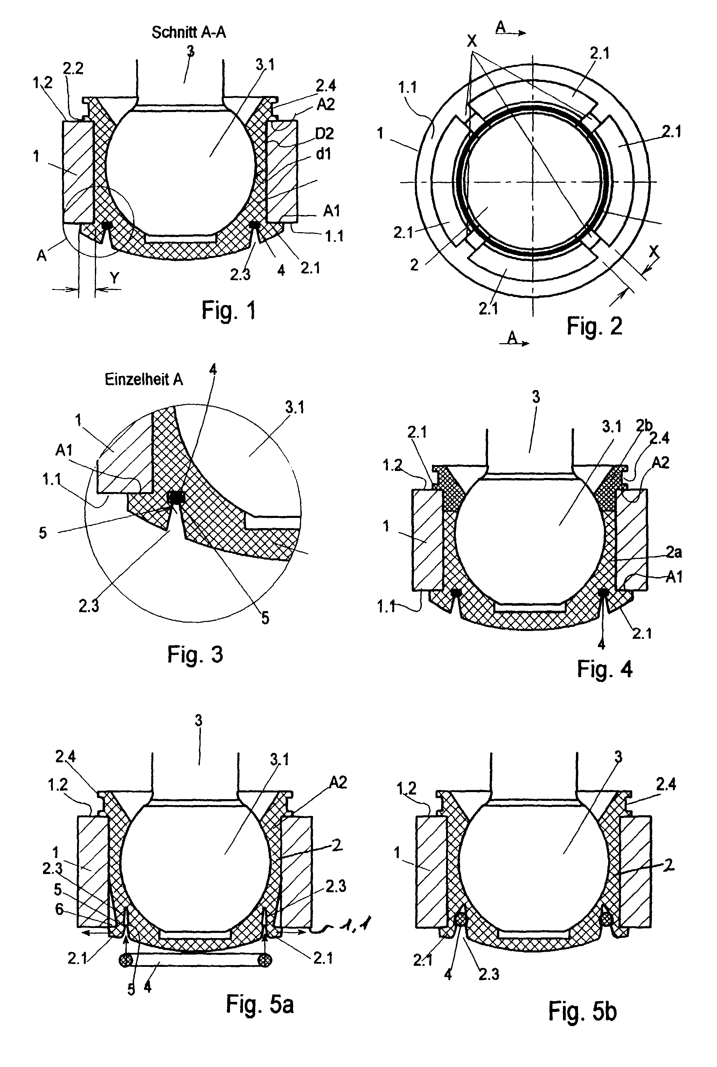

Gem. Fig. 1 ist in dem im wesentlichen zylinderförmigen Gehäuse 1 des Kugelgelenks eine Gleitschale 2 eingebracht, in welcher sich die Kugel 3.1 des Kugelzapfens 3 befindet. Zur Montage wird die Gleitschale 2 mit dem darin vormontierten Kugelzapfen 3 in Pfeilrichtung (Montagerichtung) in das Gehäuse 1 eingeknüpft. Die Gleitschale verfügt über sich axial gegenüberliegende Anlageelemente 2.1, 2.2, an welchen Anlageflächen A1, A2 ausgebildet sind, die nach der Montage an beiden Stirnflächen 1.1, 1.2 des Gehäuses 1 anliegen und die axiale Lagefixierung der Gleitschale 2 gewährleisten. Die radiale Lagefixierung wird dadurch gewährleistet, daß der Außendurchmesser D2 der Gleitschale 2 mit dem Innendurchmesser dl des Gehäuses 1 korrespondiert. In Montagerichtung vorn liegend sind insgesamt 4 voneinander beabstandete Anlageelemente 2.1 angeordnet (s. auch Fig. 2). Hinter den Anlageelementen 2.1 in radialer Richtung ist eine ringförmige in Richtung zur Kugel 3.1 des Kugelzapfens 3 weisende nutförmige Ausnehmung 2.3 eingebracht, die beim Einknüpfen ein radiales elastisches Zusammenfedern der Anlageelemente 2.1 bis auf den Innendurchmesser dl des Gehäuses 1 gewährleistet. Die Abstände X zwischen den Anlageelementen sind dabei so zu wählen, daß deren Zusammenfedern nicht behindert wird. Der sich überlappende Bereich Y zwischen der Stirnfläche 1.1 des Gehäuses 1 und der Anlagefläche A1 der Gleitschale 2 kann dadurch auch bei Gleitschalen 2 aus hartem Kunststoff (z.B. POM) erhöht werden.

In die Ausnehmung 2.3 wurde ein Fixierungselement 4 in Form eines Ringes eingefügt. In Fig. 3 ist die Einzelheit A gem.

Fig. 1 dargestellt, aus welcher zu entnehmen ist, daß der Ring 4 durch zwei in der Ausnehmung 2.3 angeordnete und aufeinander zuweisende Rastelemente 5 lagebestimmt wird. Das Anlageelement 2.2 der Gleitschale 2 ist ringförmig ausgebildet und liegt mit seiner ringförmigen Anlagefläche A2 an der Stirnfläche 1.2 des Gehäuses 1 an.

In Fig. 4 ist ein Kugelgelenk dargestellt, bei welchem die Gleitschale 2 in radialer Richtung geteilt ist. Es entstehen zwei Gleitschalenbereiche 2a und 2b. Dabei wurde der in Einknüpfrichtung vorn liegende Gleitschalenbereich 2a aus einem weicheren Kunststoff, z.B. PUR (Polyurethan), und der in Richtung zum Kugelzapfen 3 liegende Gleitschalenbereich 2b aus einem harten Kunststoff, z.B. POM (Polyoxymethylan) gefertigt. Auch hierbei ist es vorteilhaft, das Zurückfedern der Anlageelemente 2.1 bei hoher axialer Belastung durch Einlegen eines Ringes 4 in die Ausnehmung 2.3 zu verhindern. Es ist bei Anwendung eines sehr flexiblen Materials für den Gleitschalenbereich 2b auch möglich, gemäß eines nicht dargestellten Ausführungsbeispieles nur ein ringförmiges, durchgängiges Anlageelement 2.1 vorzusehen.

Fig. 5a zeigt den Schnitt durch ein Kugelgelenk mit auseinanderspreizbaren Anlageelementen. Die Gleitschale wurde in das Gehäuse eingelegt, wobei die Anlageelemente 2.1 noch hinter der Stirnfläche 1.1 des Gehäuses 1 zurückstehen und nicht selbsttätig in Rastposition gelangen. Erst wenn der Ring 4 (Fixierelement) in Pfeilrichtung in die Aussparung 2.3 gepreßt wird, werden die Anlageelemente 2.1 in Pfeilrichtung radial nach außen gedrückt, da der Querschnitt des Ringes 4 größer ist als der Querschnitt der Aussparung 2.3. Die Anlageelemente 2.1 weisen dabei Auflaufschrägen 6 auf, durch welche das Aufschieben der Anlageelemente auf die Stirnfläche 1.1 des Gehäuses begünstigt wird. Gleichzeitig beim außeinanderspreizen der Anlageelemente 2.1 wird damit in der Gleitschale 2 eine axiale Zugspannung aufgebaut.

Den Schnitt durch das Kugelgelenk gem. Fig. 5a nach dem Außeinanderdrücken der Anlageelemente 2.1 mit dem Ring 4 zeigt Fig. 5b.

Bei dieser Variante wird das Montieren der Gleitschale 2 durch die Anlageelemente 2.1 nicht behindert, da diese vor und während der Montage in ihren Außenmaßen dem Innenmaß des Gehäuses 1 entsprechen bzw. geringfügig kleiner sind und dadurch beim Montieren nicht zusammengedrückt werden müssen. Die Fixierung der Anlageelemente 2.1 hinter der Stirnfläche 1.1 des Gehäuses 1 erfolgt durch Auseinanderspreizen der Anlageelemente 2.1 beim Eindrücken des Fixierelementes 4 in die Ausnehmung 2.3. Auch hierbei sind in der Ausnehmung 2.3 Rastelemente 5 zum Lagefixieren des Ringes 4 vorgesehen.

In allen Ausführungsbeispielen weist die Gleitschale 2 an ihrem in Richtung zum Kugelzapfen 3 über das Gehäuse 1 hinausragenden Bereich eine umlaufende Nut 2.4 zur Aufnahme eines nicht dargestellten Dichtungsbalges auf.

Mit der Erfindung wird es erstmalig möglich, Kugelgelenke durch Einknüpfen der Gleitschale 2 in das Gehäuse 1 herzustellen, die auch hohen axialen Beanspruchungen gerecht werden.

## Patentansprüche

1. Kugelgelenk mit einer in einer Gleitschale aufgenommenen Kugel eines Kugelzapfens, wobei
- die Gleitschale mit der darin befindlichen Kugel des Kugelzapfens in eine Öffnung eines Gehäuses einbringbar ist und nach der Montage über zwei sich axial gegenüberliegende Anlageelemente über an zwei sich axial gegenüberliegenden Anlageelementen ausgebildete Anlageflächen, die an den beiden Stirnflächen des Gehäuses anliegen, axial fixiert ist und
- die Gleitschale im Bereich des in Montagerichtung vorn liegenden Anlageelementes eine in Richtung zur Kugel des Kugelzapfens weisende Ausnehmung aufweist, die ein radiales elastisches Federn des Anlageelementes gewährleistet,
**dadurch gekennzeichnet,**
- daß die Gleitschale in Montagerichtung mindestens zwei voneinander beabstandete Anlageelemente aufweist und
- daß in die im Bereich der Anlageelemente radial angeordneten Ausnehmungen nach der Montage mindestens ein Fixierelement einbringbar ist, welches bei axialer Belastung das Zusammenfedern der Anlageelemente verhindert.

2. Kugelgelenk nach Anspruch 1, **dadurch gekennzeichnet**, daß die Anlageelemente in Ihren Außenmaßen vor und während der Montage dem Innenmaß des Gehäuses entsprechen und erst nach dem Monieren, mit dem Einbringen des Fixierelementes in die Ausnehmung, radial nach außen gespreizt werden.

3. Kugelgelenk nach Anspruch 2, **dadurch gekennzeichnet**, daß die Breite (a) des Fixierelementes größer ist als die Breite (b) der Ausnehmung.

4. Kugelgelenk nach einem der Ansprüche 1 oder 2, **dadurch gekennzeichnet,** daß das Fixierelement ringförmig oder ringsegmentförmig ausgebildet ist.

5. Kugelgelenk nach einem der Ansprüche von 1 bis 4, **dadurch gekennzeichnet**, daß das Fixierelement an einem Deckel ausgebildet ist.

6. Kugelgelenk nach einem der Ansprüche von 1 bis 5, **dadurch gekennzeichnet**, daß die Ausnehmung mindestens ein Rastelement aufweist, hinter welchem das Fixierelement einrastet und lagebestimmt ist.

7. Kugelgelenk nach einem der Ansprüche von 1 bis 6, **dadurch gekennzeichnet,** daß die Gleitschale vier voneinander beabstandete Anlageelemente aufweist.

8. Kugelgelenk nach einem der Ansprüche von 1 bis 7, **dadurch gekennzeichnet**, daß die Anlageelemente gleich oder unterschiedlich dimensioniert sind.

9. Kugelgelenk nach einem der Ansprüche von 1 bis 8, **dadurch gekennzeichnet**, daß die Gleitschale radial so geteilt ist, daß der in Montagerichtung weisende Bereich aus weichem Kunststoff besteht, der das elastische zusammenfedern oder außeinanderdrücken begünstigt und daß der in Richtung zum Kugelzapfen weisende Bereich aus hartem Kunststoff besteht, der den Verschleißbedingungen in diesem Bereich gerecht wird und die axialen Auszugkräfte aufnimmt.

10. Kugelgelenk nach Anspruch 9, **dadurch gekennzeichnet,** daß beide Bereiche der Gleitschale vor der Montage miteinander verbunden werden.

11. Kugelgelenk nach Anspruch 9 oder 10, **dadurch gekennzeichnet,** daß beide Gleitschalenbereiche durch eine stoffschlüssige Verbindung miteinander verbunden sind.

12. Kugelgelenk nach einem der Ansprüche von 9 bis 11, **dadurch gekennzeichnet**, daß beide Bereiche durch Ultraschall miteinander verbunden sind.
